Europäisches Patentamt

European Patent Office

Office européen des brevets

(11) Veröffentlichungsnummer: **0 036 032**

**A2**

(12) # EUROPÄISCHE PATENTANMELDUNG

(21) Anmeldenummer: 80103262.4

(51) Int. Cl.³: **F 16 L 59/12**

(22) Anmeldetag: 12.06.80

(30) Priorität: 19.03.80 DE 3010437

(43) Veröffentlichungstag der Anmeldung:
23.09.81 Patentblatt 81/38

(84) Benannte Vertragsstaaten:
AT BE CH FR GB IT LI SE

(71) Anmelder: Kabel- und Metallwerke
Gutehoffnungshütte Aktiengesellschaft
Kabelkamp 20 Postfach 260
D-3000 Hannover 1(DE)

(72) Erfinder: Kuypers, Hubert, Ing.
Gerhard-Hauptmann-Weg 12
D-3052 Bad Nenndorf(DE)

(54) Verfahren zur kontinuierlichen Herstellung von Abstandshaltern für koaxiale Rohrsysteme.

(57) Bei einem Verfahren zur Herstellung im Querschnitt rechteckförmiger Abstandshalter (6) für wärmeisolierte Leitungsrohre wird ein schäumfähiges Kunststoffgemisch auf einen U-förmig ausgebildeten Träger aufgebracht, dort ohne obere Begrenzung frei geschäumt und anschließend der die Höhe des Trägers überragende Teil des aufgeschäumten Kunststoffes entfernt. Der so gebildete Strang (1) wird dann mit quer zu seiner Bewegungsrichtung verlaufenden Einschnitten (3) versehen. Um ein besseres Anliegen des Abstandshalters (6) an dem Innenrohr (8) und damit eine bessere Konzentrizität zwischen dem Innenrohr (8) und dem Außenrohr (9) und eine gleichmäßigere Verteilung des die Wärmeisolierschicht (10) bildenden Schaumstoffes zu erreichen, wird der Strang (1) zusätzlich mit unter einem Winkel von 10 - 80°, vorzugsweise von 35 - 55° zur Längsachse verlaufenden Einschnitten (5) versehen.

Fig 2

Croydon Printing Company Ltd.

K a b e l - u n d  M e t a l l w e r k e
Gutehoffnungshütte Aktiengesellschaft

1 1741
17.03.1980

Verfahren zur kontinuierlichen Herstellung von Abstandshaltern für koaxiale Rohrsysteme

Die Erfindung betrifft ein Verfahren zur kontinuierlichen
Herstellung von Abstandshaltern für koaxiale Rohrsysteme
insbesondere für mit einem aufschäumbaren Kunststoff
thermisch isolierte Rohr zum Transport flüssiger oder
gasförmiger, erwärmter oder gekühlter Medien, die aus
mindestens zwei, vorzugsweise gewellten konzentrisch zueinander angeordneten Rohren bestehen, zwischen denen
der Abstandshalter wendelförmig verlaufend angeordnet
ist, bei welchem in an sich bekannter Weise ein aufschäumbarer Kunststoff auf einen kontinuierlich bewegten
U-förmig ausgebildeten bandförmigen Träger aufgebracht,
dort ohne obere Begrenzung frei geschäumt, der die Höhe
des Trägers überragende Teil des aufgeschäumten Kunststoffes entfernt und der Strang mit quer zur Bewegungsrichtung verlaufenden Einschnitten versehen wird.

Ein derartiges Verfahren ist aus der DE-PS 17 79 599
bekannt. Die nach diesem bekannten Verfahren hergestellten Abstandshalter werden aufgrund ihrer geringen Flexibilität beim Aufwickeln auf das Innenrohr bei den erforderlichen Wendelschlaglängen sehr stark auf Torsion beansprucht. Durch die zusätzlich auftretende Biegebeanspruchung lösen sich unter Umständen Schaumstücke der
Abstandshalter teilweise vom Trägerband, wodurch die
Konzentrizität der Innenrohre nicht mehr gewährleistet
ist. Ein weiterer Nachteil des auf Torsion beanspruchten
wendelförmigen Abstandshalters ist darin zu sehen, daß
ein sattes Anliegen des Trägerbandes des Abstandshalters
an dem Innenrohr praktisch nicht zu erreichen ist. Bei
der Herstellung von thermisch isolierten Leitungsrohren
unter Verwendung des oben beschriebenen Abstandshalters
hat es sich noch als nachteilig herausgestellt, daß die
senkrechten Einschnitte, die auf dem Innenrohr unter dem
Winkel der Schlaglänge verlaufen, dem sich in Längsrichtung ausbreitenden Schaum einen Widerstand entgegensetzen,
indem sie diesen in seiner Richtung umlenken, wodurch es
zu einer Störung der freien Schaumbildung kommt, die
wiederum zu einer Lunkerbildung im thermisch isolierten
Rohrsystem führt.

Der vorliegenden Erfindung liegt die Aufgabe zugrunde,
ein Verfahren anzugeben, mit dem es möglich ist, einen
Abstandshalter herzustellen, der sich wesentlich leichter um ein Rohr wendelförmig aufbringen läßt und der die
freie Ausbreitung des Schaums wesentlich weniger behindert.

Diese Aufgabe wird bei einem Verfahren der eingangs erwähnten Art dadurch gelöst, daß der Strang darüber hinaus mit unter einem Winkel von 10 bis $80^{\circ}$, vorzugsweise von 35 bis $55^{\circ}$ zur Längsachse verlaufenden Einschnitten versehen wird. Während die unter $90^{\circ}$ zur Längsachse verlaufenden Einschnitte im wesentlichen das Auftrommeln der Abstandshalter erleichtern, klaffen die unter einem Winkel verlaufenden Einschnitte erst beim Aufwickeln des Abstandhalters auf das Innenrohr auf, wobei die unter $90^{\circ}$ verlaufenden Einschnitte geschlossen bleiben. Optimal ist es, wenn die Einschnitte unter einen Winkel zur Längsachse des Stranges derart eingebracht werden, daß die Beziehung tangens $\alpha = \frac{s}{d \cdot \pi}$ erfüllt ist, worin s die Schlaglänge, mit welcher der Abstandshalter auf das Innenrohr aufgebracht wird und $d \cdot \pi$ der Umfang des Innenrohres bedeuteten. Bei dieser Bedingung klaffen die Schrägeinschnitte genau parallel zur Längsrichtung des Innenrohres auf. Nach einem weiteren Gedanken der Erfindung werden beide Einschnitte im gleichen Takt eingebracht. Für die Verbesserung der Flexibilität und Stabilität der Abstandshalterwendel und damit der Konzentrizität der Innenrohre sind neben dem Schrägschnitt auch die zugehörigen Schnittabstände wichtig. Sie stehen in bestimmtem Verhältnis zum Innenrohrdurchmesser. Als vorteilhaft hat es sich erwiesen, die Schrägschnitte unter einem Abstand einzubringen, der mindestens doppelt so groß ist, wie der Abstand zwischen den senkrechten Einschnitten.

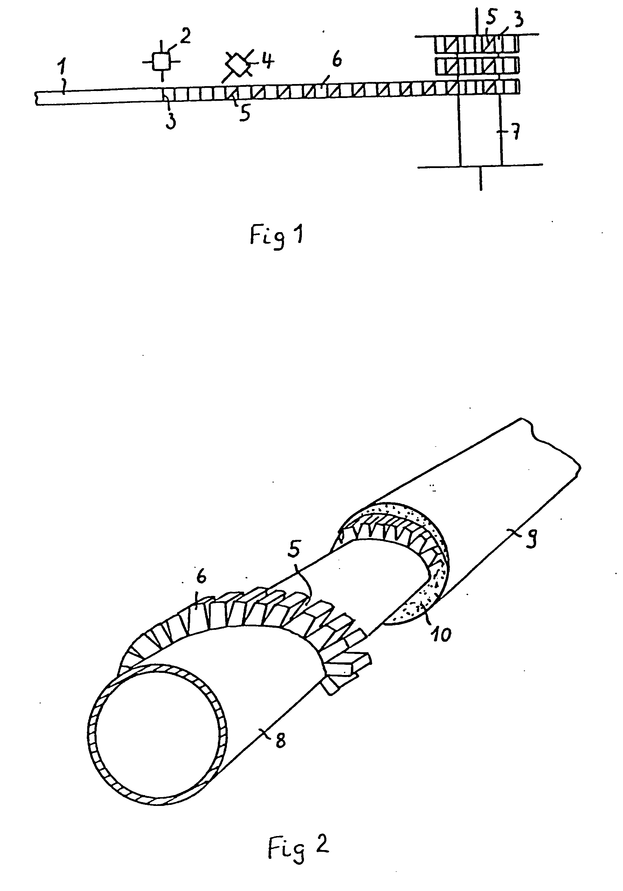

Die Erfindung ist anhand der in den Figuren 1 und 2 schematisch dargestellten Ausführungsbeispiele näher erläutert.

Ein aus einer nicht dargestellten Schäumanlage kontinuierlich ablaufender Schaumstoffstrang 1 wird mittels einer pendelförmig aufgehängten Säge 2 mit quer zur Längsrichtung des Stranges 1 verlaufenden Einschnitten 3 versehen. Mittels einer weiteren Säge 4, deren Bewegungsrichtung unter einem Winkel zur Durchlaufrichtung des Stranges 1 verläuft, werden Schrägschnitte 5 in den Schaumstoffstrang 1 eingebracht. Sowohl die Einschnitte 3 als auch die Einschnitte 5 durchdringen den Schaumstoffstrang 1 bis nahezu an das aus der DE-PS 17.79 599 bekannte Trägerband. Der auf diese Weise hergestellte Abstandshalter 6 wird auf eine Vorratstrommel 7 aufgewickelt. In dem dargestellten Ausführungsbeispiel ist der Abstand zwischen den schräg verlaufenden Einschnitten 5 doppelt so groß gewählt wie der Abstand zwischen den senkrecht verlaufenden Einschnitten 3. Während der Abstand zwischen den Einschnitten 3 abhängig ist vom Kerndurchmesser der Aufwickeltrommel 7, hängt der Abstand zwischen den Einschnitten 5 weitestgehend vom Außendurchmesser des Rohres ab, auf welches der Abstandshalter 6 aufgewickelt werden soll.

Die Figur 2 zeigt ein Ausführungsbeispiel eines koaxialen Rohrsystems, welches aus einem Innenrohr 8 und einem Außenrohr 9 besteht. Zur Aufrechterhaltung der Konzentrizität zwischen dem Innenrohr 8 und dem Außenrohr 9 ist der Abstandshalter 6 wendelförmig auf das Innenrohr 8 aufgebracht. Dabei klaffen die Einschnitte 5 derart auf, daß sie in Längsrichtung des Innenrohres 8 verlaufen. Die Einschnitte 3 bleiben geschlossen. Der nach dem erfindungsgemäßen Verfahren hergestellte Abstandshalter 6 liegt nahezu torsionsfrei auf dem Innenrohr 8 auf, so daß eine einwandfreie Konzentrizität von Innenrohr 8 und Außenrohr 9 gewährleistet ist. Die in Längsrichtung des Rohres 8 verlaufenden Einschnitte 5 setzen dem zwischen den Innenrohr 8 und den Außenrohr 9 eingebrachten flüssigen Schaumstoffkomponenten, welche die thermische Isolierung 10 zwischen dem Innenrohr 8 und dem Außenrohr 9 bilden, einen weit geringeren Widerstand entgegen als die bisher bekannten Einschnitte 3, welche im Falle der Figur 2
unter dem Winkel der Schlaglänge bzw. senkrecht dazu
ausgerichtet wären.

K a b e l - u n d  M e t a l l w e r k e
Gutehoffnungshütte Aktiengesellschaft

1 1741
17.03.1980

Patentansprüche

1. Verfahren zur kontinuierlichen Herstellung von Abstandshaltern für koaxiale Rohrsysteme, insbesondere für mit einem aufschäumbaren Kunststoff thermisch isolierte Rohre zum Transport flüssiger oder gasförmiger, erwärmter oder gekühlter Medien, die aus mindestens zwei vorzugsweise gewellten konzentrisch zueinander angeordneten Rohren bestehen, zwischen denen der Abstandshalter wendelförmig verlaufend angeordnet ist, bei welchem in an sich bekannter Weise ein aufschäumbarer Kunststoff auf einen kontinuierlich bewegten, U-förmig ausgebildeten bandförmigen Träger aufgebracht, dort ohne obere Begrenzung frei geschäumt, der die Höhe des Trägers überragende Teil des aufgeschäumten Kunststoffes entfernt und der Strang mit quer zur Bewegungsrichtung verlaufenden Einschnitten versehen wird, dadurch gekennzeichnet, daß der Strang darüber hinaus mit unter einem Winkel von 10 bis 80°, vorzugsweise von 35 bis 55° zur Längsachse verlaufenden Einschnitten versehen wird.

2. Verfahren nach Anspruch 1, dadurch gekennzeichnet, daß die Einschnitte unter einem Winkel $\alpha$ zur Längsachse des Stranges derart eingebracht werden, daß die Beziehung $tg = \frac{s}{d \cdot \pi}$ erfüllt ist, worin s die Schlaglänge, mit welcher der Abstandshalter auf das Innenrohr aufgebracht wird und $d \cdot \pi$ der Umfang des Innenrohres bedeuten.

3. Verfahren nach Anspruch 1, oder 2, dadurch gekennzeichnet, daß beide Einschnitte im gleichen Takt eingebracht werden.

4. Verfahren nach Anspruch 1 oder 2, dadurch gekennzeichnet, daß der Abstand zwischen den schrägverlaufenden Einschnitten mindestens doppelt so groß wie der Abstand zwischen den senkrechten Einschnitten ist.

Fig 1

Fig 2